# EUROPEAN PATENT SPECIFICATION

(11) **EP 4 183 645 B1**
(45) Date of publication and mention of the grant of the patent: **19.03.2025**
(21) Application number: 21209262.1
(22) Date of filing: 19.11.2021
(51) Int. Cl.: B60T 13/68, B60T 8/32, B60T 15/04, B60T 17/22

(54) **MODULE FOR A PRESSURE-CONTROLLED BRAKE SYSTEM**
MODUL FÜR DRUCKGESTEUERTES BREMSSYSTEM
MODULE POUR UN SYSTÈME DE FREINAGE COMMANDÉ PAR PRESSION

(43) Date of publication of application: 24.05.2023
(73) Proprietor: KNORR-BREMSE Systeme für Nutzfahrzeuge GmbH, 80809 München (DE)
(72) Inventor: NEMETH, Huba, 1116 Budapest (HU); COMPERA, Yves, 85748 Garching bei München (DE); STEINGRUBER, Christian, 82439 Großweil (DE); BIRKAS, Balazs Viktor, 1115 Budapest (HU)

(56) References cited:
- EP-A1- 1 571 061
- EP-A1- 1 785 325
- WO-A2-2009/098003
- DE-A1- 102014 107 218
- DE-A1- 102019 125 747

## Description

The present invention relates to a module for a pressure-controlled brake system, a brake system and a vehicle.

In today's commercial vehicles a trailer control module (TCM) is provided, for controlling a brake system of a trailer which is coupled to the commercial vehicle. Two operating modes are provided in the TCM. According to a first operating mode, the TCM supplies a control pressure to the trailer to activate its brake system in particular to reduce the speed of the trailer. According to a second operating mode, the TCM activates the brake system durable in particular to hold the trailer in a non-moving state, in particular a parking state. For a secure operation of the commercial vehicle and the trailer, it is mandatory to ensure that the TCM does not switch from one operating mode to the other.

Today, these operating modes are securely activated by other modules or devices of the commercial vehicle. For example, an appropriate signal is sent to the TCM from the pneumatic brake or from the electric parking brake (EPB).

DE 10 2019 125 747 A1 shows an electro-pneumatic brake valve unit.

EP 1 571 061 A1 shows an electrically controlled pneumatic brake device for a vehicle.

EP 1 785 325 A1 shows a control unit for a pneumatic brake device for a vehicle and such a pneumatic brake device.

WO 2009 / 098 003 A2 shows a parking brake device.

Finally, DE 10 2014 107 218 A1 shows an electric parking brake.

In the future, pneumatic brake actuation will be withdrawn and replaced by electromechanical brake systems. Further, actuation via the EPB is too error-prone.

Therefore, it is an object of the present invention to provide a solution for a pressure-based actuation of a brake system, wherein safe operating modes are provided.

In the following, the term "pressure" is used. That means, that the subject matters described below use a fluid to supply the respective pressure. In particular, the pressure is supplied by pressurized air. Therefore, the subject matters described below are preferably pneumatic devices. However, according to another embodiment, these devices can be configured as hydraulic devices as well.

According to the invention, a module for generating and supplying a control pressure for a pressure-controlled brake system of a first vehicle is provided. In particular, the brake system is a fluidic brake system, preferably a pneumatic or a hydraulic brake system. The module comprises the following elements:
- a valve unit comprising at least two stable switching states;
- a pressure source configured to provide a supply pressure to the valve unit; and
- an outlet port configured to supply the control pressure to the brake system of the first vehicle; wherein
the module is configured to generate the control pressure from the supply pressure according to at least two operating modes which are respectively activated according to one of the at least two switching states of the valve unit.

Preferably, there are exactly two stable switching states in the valve unit, wherein the valve unit is therefore configured as a bi-stable switching valve unit.

Since the at least two switching states of the valve unit are stable and the operating modes are activated according to the at least two switching states, respectively, unintentional switching from one operating mode to another operating mode is avoided. To switch from one operating mode to another, an active switching caused by a certain signal must be carried out. Leaving the current operating mode is therefore only possible if an active switching is carried out by a further signal. When the module is in a certain operating mode and even if the signal, which activates the certain operating mode is switched off, the module stays in this operating mode until it switches to another operating mode as reaction to another signal.

Preferably, the module is configured to generate the control pressure between a minimum and a maximum control pressure value, wherein the minimum control pressure value is preferably zero. In this application, a pressure value of zero means atmospheric pressure. The respective line is preferably vented in this case.

Preferably, according to a first of the at least two operating modes, the generated control pressure is controllable between the minimum and maximum control pressure value. The module is preferably configured to control the control pressure according to an external signal which the module receives from other devices. For example, the external signal comprises an electric, electronic or fluidic signal. Preferably, the external signal is provided to the module by a brake pedal, a foot brake module or by a control unit. This operating mode is preferably used during a moving state of the first vehicle to control its speed by the brake system. Further, to control the control pressure between the minimum and maximum control pressure value, the module preferably comprises a proportional valve, wherein a certain pressure value between the maximum and minimum control pressure value can be set.

According to a second of the at least two operating modes, the module is configured to set the generated control pressure to a constant control pressure value to activate the brake system of the first vehicle to hold the first vehicle in a non-moving state or in a parking state. In particular, the constant control pressure value is the maximum control pressure value. In this operating mode, the brake system is durably activated.

As the first operating mode may be used during a moving state of the first vehicle and the second operating mode may be used during a non-moving state of the first vehicle, it is mandatory not to switch unintentionally between the operating modes. For example, when the first vehicle is in a moving state, it must be avoided that the brake system is activated according to the second operating mode. In this case, the brake system would activate its brakes according to a constant control pressure, in particular according to the maximum control pressure while the first vehicle is moving. Further, when the first vehicle is in a non-moving state, in particular a parking state, and it is held in this state by the brake systems due to the activation of its brakes according to the control pressure generated according to the second operating mode, it must be avoided, that the brakes of the brake system are deactivated and released, wherein the first vehicle is not held by the brake system any more. Since these cases are safety-relevant cases, the invention solves this problem by providing the stable switching states of the valve unit, wherein unintentional switching of operating modes is avoided.

Preferably, the pressure source comprises an inlet port configured to receive the supply pressure and/or a pressure reservoir and/or a compressor. The inlet port can be connected to a corresponding line, a pressure reservoir or a compressor to receive the supply pressure. However, the module may comprise a pressure reservoir and/or a compressor.

Preferably, the brake system of the first vehicle comprises a service brake of the first vehicle. That means, the brake system is preferably directly activated by the control pressure supplied from the module to the brake system. In particular, the brake force or the brake effect applied by the brake system to the first vehicle is proportional to the control pressure value of the control pressure generated by the module.

Preferably, the valve unit is configured to be controlled by an electric control signal. According to this embodiment the valve unit comprises an actuation capable to actuate at least one valve of the valve unit according to the control signal.

Preferably, the module comprises a control unit with electric and/or electronic control means, configured to generate and/or to receive the electric control signal and/or to supply the electric control signal to the valve unit. The control means may comprise an input port, to receive the control signal, which is generated by another device, in particular by another control unit, preferably by another superordinate control unit. The control means may comprise a separate control unit as well, wherein the control of the module, in particular of the valve unit, is carried out by this control unit.

Preferably, for realizing the at least two stable switching states, the valve unit comprises at least one valve assembly with a pressure actuated valve with at least two stable switching states. Preferably, the pressure actuated valve comprises at least one actuation input port, wherein the pressure actuated valve is configured to hold one of the at least two stable switching states of the pressure actuated valve when the at least one actuation input port is pressurised accordingly. Alternatively or additionally, the pressure actuated valve comprises a spring configured to hold one of the at least two stable switching states of the pressure actuated valve.

Preferably, the pressure generated by the valve assembly according to its at least two stable switching states is a module control pressure. Preferably, the module control pressure is supplied to the at least one actuation input port of the pressure actuated valve to hold the pressure actuated valve in the corresponding stable switching state.

Preferably, the valve assembly comprises at least one actuation pressure generating valve the pressure actuated valve is connected to for controlling at least one actuation pressure for the pressure actuated valve, wherein the at least one actuation pressure generating valve preferably comprises a solenoid valve and/or a normally closed valve.

According to one embodiment, the pressure actuated valve comprises two switching states and three actuation input ports. Further, when no pressure is applied to the pressure actuated valve via the three actuation input ports (first, second and third actuation input port), the pressure actuated valve is switched in its first switching state and kept therein by a spring. According to this switching state, the module is operated in its first operating mode. Further, when the pressure actuated valve is switched to its second switching state, by supplying a pressure to the second actuation input port, the module is operated in its second operating mode and the third actuation input port is pressurized as well, to keep the pressure actuated valve in its second switching state. To re-switch the pressure actuated valve in its first switching state and therefore to activate the first operating mode of the module, the first actuation input port is pressurised and therefore the valve is re-switched in its first switching state. Preferably, the first and second actuation input ports are connected to the at least one actuation pressure generating valve, whereby the pressurizing and venting of these ports can be controlled. Preferably, the third actuation input port is connected to the output port of the pressure actuated valve, wherein the pressure actuated valve supplies pressure to this port when it is in the second switching mode to hold the pressure actuated valve in the second switching state.

Additionally or alternatively, for realizing the at least two stable switching states, the valve unit comprises at least one stable switching solenoid valve and/or at least one self-locking valve driven by a self-locking driving device, the self-locking driving device preferably comprises a self-locking electric motor and/or a self-locking spindle and nut drive. The stable switching solenoid valve can comprise a latching to keep the valve in the respective switching state.

Preferably, the valve unit comprises a control valve, wherein the valve unit is configured to generate a module control pressure for controlling the control valve according to the at least two switching states, wherein the control valve is configured to generate the control pressure according to the module control pressure from the valve unit. Preferably, the control valve is switched into its first switching state by a certain module pressure value, preferably a value of zero. In this switching state, which corresponds to the first operating mode of the module, the control valve generates the control pressure continuously. Thereby, the brake system of the first vehicle is activated during a driving operation of the first vehicle. When the control valve is switched to a second switching state corresponding to the second operating mode of the module, the control valve generates a constant control pressure, preferably a maximum control pressure. According to this control pressure, the brake system is activated durable, preferably to keep the first vehicle in a non-moving state. The control valve is preferably configured as a proportional and/or a relay valve or the control valve preferably comprises such a valve.

Preferably, the module is configured as a first vehicle control module, in particular a trailer control module, the module comprising as a further element:
- a driver input control pressure port for a driver input control pressure, from a brake pedal or from a foot brake module, wherein the module is configured to generate the control pressure according to the driver input control pressure; and/or
- a supply pressure outlet port configured to supply a brake system supply pressure to the brake system.

Preferably, and in particular as a trailer control module, the module is preferably provided in a second vehicle, which is connected to the first vehicle and wherein the first vehicle, in this case the trailer, is towed by the second vehicle. However, it is also possible to provide the module in or on the first vehicle, respectively the trailer, as well.

Preferably, the module is configured to control the control valve, in particular during the first operating mode of the module, according to an input control pressure, in particular according to the driver input control pressure, and/or according to another control signal like an electric or electronic control signal from another control unit or from a brake pedal or a foot brake module, wherein it generates the control pressure according to the input control pressure.

Further, via the supply pressure outlet port the supply pressure of the pressure source can be supplied to the brake system as a system supply pressure. According to a particular embodiment of the invention, the control valve is configured to control the system supply pressure, that means that the module comprises a connection from the pressure source via the control valve to the supply pressure outlet port.

Preferably, the first vehicle is a trailer, configured to be connected with and towed by a second vehicle, wherein preferably, the module is configured to be provided in or on the second vehicle.

Preferably, the module comprises a housing or a carrier member, wherein the elements of the module are provided in and/or on the housing or the carrier member. Providing a housing or a carrier member has the advantage that the module can be attached or replaced as a whole element, wherein maintenance gets easier for the maintenance staff. A housing has the further advantage that the elements of the module are protected against environmental influence.

According to a further aspect of the invention, a brake system for a vehicle is provided. The brake system comprises a module as described above. The brake system is preferably a fluidic brake system, in particular a pneumatic or a hydraulic brake system. Further preferably, the brake system comprises friction brakes as disc and/or drum brakes.

According to a further aspect of the invention, a vehicle comprising a module as described above and/or a brake system as described above is provided. The vehicle is preferably configured as a second vehicle as described above. In general, a commercial vehicle may be a truck, a towing vehicle or a bus. However, the vehicle can be configured as a first vehicle as described above as well, in general a trailer. The vehicle can be configured as an electric driven vehicle with a combination of a traction battery and an electric machine and/or with a combination of a fuel cell and an electric machine. However, the vehicle can be configured as a hybrid or conventional vehicle as well.

Features relating to the brake system or to the vehicle, which are mentioned in the description of the module, can also be applied to the brake system and the vehicle according to the invention.

In the following, preferred embodiments of the invention are described by referring to the attached drawings.
- Fig. 1: shows a general configuration of a module according to the present invention.
- Fig. 2: shows a first embodiment of a valve unit of a module according to the present invention.
- Fig. 3: shows a second embodiment of a valve unit of a module according to the present invention.
- Fig. 4: shows a third embodiment of a valve unit of a module according to the present invention.

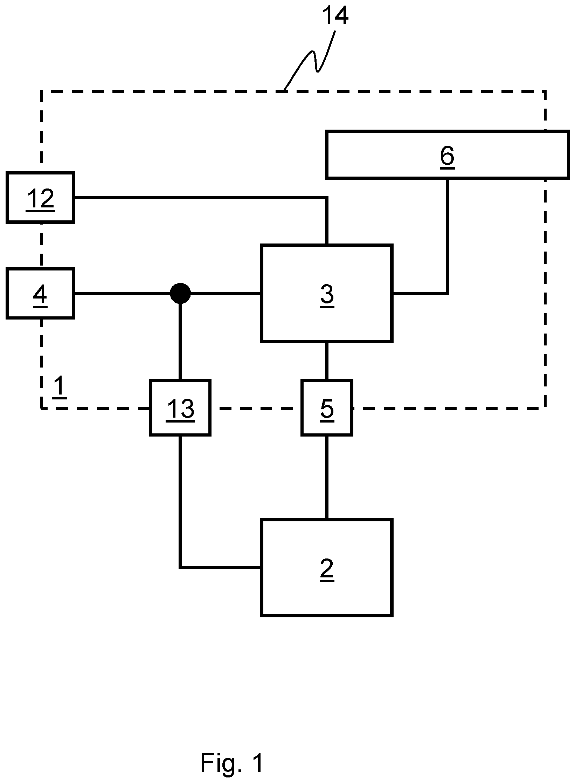

**Fig.** 1 shows a general configuration of a module according to the present invention.

A module 1 is shown comprising the following elements: a valve unit 3, a pressure source 4 and an outlet port 5. The module 1 is marked up by a dotted frame.

The outlet port 5 is connected to a pressure-controlled brake system 2 of a first vehicle (not shown). Via the outlet port 5, the module 1 is configured to supply a control pressure for controlling the brake system 2 as indicated by the line between the outlet port 5 and the brake system 2.

The pressure source 4 is shown as a box in the drawing and can comprise an inlet port configured to receive the supply pressure from another source (not shown) and/or a pressure reservoir and/or a compressor. The pressure source 4 is connected to the valve unit 3, wherein the supply pressure of the pressure source 4 is supplied to the valve unit 3 as indicated by the line between the pressure source 4 and the valve unit 3.

Further, the module 1 comprises a control unit 6. The control unit 6 comprises electric and/or electronic control means, configured to generate an electric control signal and/or to supply the electric control signal to the valve unit 3 for controlling the valve unit 3. The control unit 6 can comprise a separate controller, which is exclusively configured to control the module 1 respectively the valve unit 3. According to other embodiments, the control unit 6 can comprise an input port to receive the control signal and to supply it to the valve unit 3. That means, the invention is not limited to a certain type of control unit. Further, if the valve unit 3 is not configured to be controlled by an electric control signal, it is clear for a person skilled in the art, that the control unit 6 is only optional, since it is not needed for supplying the control signal to the valve unit 3.

Further, the module 1 can comprise a housing 14, wherein at least the valve unit 3, the pressure source 4 and the outlet port 5 are provided in or on the housing 14. Alternatively to the housing 14, the module can comprise a carrier member, wherein at least the valve unit 3, the pressure source 4 and the outlet port 5 are provided in or on the carrier member. Providing the housing 14 or the carrier member, is an optional feature. One advantage of these embodiments is, that the module 1 can be attached or replaced as a whole element, wherein maintenance gets easier for the maintenance staff.

Further, the module 1 optionally comprises a driver input control pressure port 12, which is connected to the valve unit 3 as indicated by the line in-between. Via the driver input control pressure port 12, a driver can supply a driver input control pressure to the module 1 respectively to the valve unit 3. The driver input control pressure can be generated by a brake pedal or by a foot brake module.

Further optionally, the module 1 comprises a supply pressure outlet port 13, which is connected to the pressure source 4 and further connected to the brake system 2. The supply pressure outlet port 13 is configured to supply the supply pressure to the brake system. However, according to other embodiments of the invention, the module 1 does not comprise such a supply pressure outlet port 13 since the brake system 2 is supplied in another way with the supply pressure. According to a further embodiment, the supply pressure outlet port 13 is not directly connected to the pressure source 4. Instead, between the supply pressure outlet port 13 and the pressure source 4, the valve unit 3 is provided, wherein the supply pressure supplied to the brake system 2 via the supply pressure outlet port 13 can be controlled by the valve unit 3.

The elements 4, 5, 6, 12 and 13 are shown as elements which extend over the border (the dotted frame) of the module 1. According to some embodiments, these elements can comprise interfaces to other devices or systems, which are not part of the module 1. A person skilled in the art may recognize that this is only an optional feature and the elements 4, 5, 6, 12 and 13 can also be completely provided within the module 1.

The module 1 in this general form works as follows.

The module 1 comprises at least two operating modes, which are activated by the valve unit 3, which comprises at least two corresponding switching states. According to embodiments, which are controlled by the control unit 6, the valve unit 3 is switched in one particular of the at least two switching states. The at least two switching states of the valve unit 3 are stable switching states. That means that they are kept by the valve unit 3 until switching to another switching state is triggered, for example by the control unit 6. That means further, that during a malfunction, for example during a blackout, the current switching state is kept by the valve unit 3 and therefore the corresponding operating mode is kept as well.

According to a first operating mode, the valve unit 3 generates and/or supplies a control pressure to the outlet port 5, wherein the control pressure value is variable between a maximum and a minimum pressure value. Preferably, the maximum pressure value is the pressure value of the supply pressure and, further preferably, the minimum pressure value is zero. In this operating mode, the brake system 2 can be used to control the speed of the first vehicle the brake system 2 is attached to when the first vehicle is in a moving state.

According to a second operating mode, the valve unit 3 generates a control pressure from the supply pressure und supplies it to the outlet port 5. This control pressure causes the durable activation of the brake system 2, wherein the first vehicle the brake system 2 is attached to can be hold in a non-moving state.

Since both switching states are stable switching states, switching from one operating mode to the other can only be triggered by an active signal. In the following, several possible embodiments for a valve unit 3 with two stable switching states are shown.

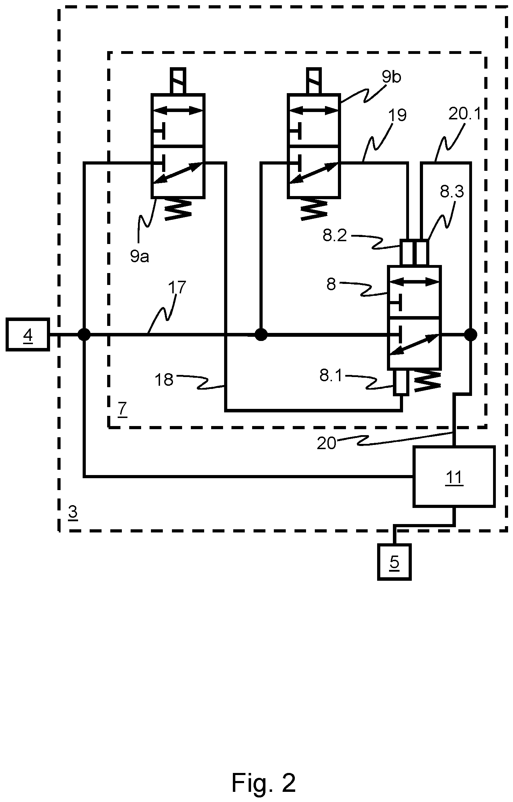

Fig. 2 shows a first embodiment of a valve unit 3 of a module 1 according to the present invention.

A valve unit 3 is shown marked-up by a dotted frame. The valve unit 3 comprises a control valve 11 and a valve assembly 7. To keep the drawing simple, the module 1 according to Fig. 1 is not shown. Therefore, for the module 1, reference is made to Fig. 1.

The control valve 11 is connected to the pressure source 4 of the module 1 via a pressure supply line 17 of the valve unit 3. Further, the control valve 11 is connected to the valve assembly 7 via a module control pressure line 20. Further, the control valve 11 is connected to the outlet port 5 of the module 1 and configured to supply the generated control pressure to the outlet port 5.

The valve assembly 7 comprises a first and a second actuation pressure generating valve 9a, 9b, which are configured as normally-closed solenoid valves. Further, the valve assembly 7 comprises a pressure actuated valve 8 comprising three actuation input ports 8.1, 8.2, 8.3.

The actuation pressure generating valves 9a, 9b and the pressure actuated valve 8 are connected via the pressure supply line 17 to the pressure source 4.

The first actuation pressure generating valve 9a is connected to the first actuation input port 8.1 of the pressure actuated valve 8 via a first actuation pressure supply line 18. In the closed state of the first actuation pressure generating valve 9a as it is shown in the drawing, the pressure supply line 17 is disconnected from the first actuation pressure supply line 18, wherein the first actuation pressure supply line 18 is vented. In the open state of the first actuation pressure generating valve 9a, which is the second switching state of the first actuation pressure generating valve 9a, the pressure supply line 17 is connected to the first actuation pressure supply line 18. Therefore, by switching the first actuation pressure generating valve 9a in its second switching state, pressure can be supplied from the pressure supply line 17 to the first actuation input port 8.1.

The second actuation pressure generating valve 9b is connected to the second actuation input port 8.2 of the pressure actuated valve 8 via a second actuation pressure supply line 19. In the closed state of the second actuation pressure generating valve 9b as it is shown in the drawing, the pressure supply line 17 is disconnected from the second actuation pressure supply line 19, wherein the second actuation pressure supply line 19 is vented. In the open state of the second actuation pressure generating valve 9b, which is the second switching state of the second actuation pressure generating valve 9b, the pressure supply line 18 is connected to the second actuation pressure supply line 19. Therefore, by switching the second actuation pressure generating valve 9b in its second switching state, pressure can be supplied from the pressure supply line 17 to the second actuation input port 8.2.

A branch 20.1 of the module control pressure line 20 is connected to the third actuation input port 8.3. In other words, the pressure, which is supplied to the control valve 11 is also supplied to the third actuation input port 8.3.

The pressure actuated valve 8 comprises two switching states. According to a first switching state that corresponds to the state shown in the drawing, the pressure actuated valve 8 disconnects the pressure supply line 17 from the module control pressure line 20, wherein the module control pressure line 20 is vented. According to a second switching state, the pressure actuated valve 8 connects the pressure supply line 17 to the module control pressure line 20. Therefore, pressure can be supplied from the pressure supply line 17 via the pressure actuated valve 8 to the control pressure line 20.

Both switching states of the pressure actuated valve 8 are controllable by the pressure supplied to the actuation input ports 8.1, 8.2, 8.3. A pressure supplied to the first actuation input port 8.1 acts on the pressure actuated valve 8 to switch it in the first switching state as shown in the drawing. Besides the first actuation input port 8.1, the pressure actuated valve 8 is spring-loaded, wherein the spring force also acts on the pressure actuated valve 8 to switch it into the first switching state. A pressure supplied to the second or third actuation input ports 8.2, 8.3 acts on the pressure actuated valve 8 to switch it in the second switching state.

The valve assembly 7 and the valve unit 3 work as follows.

In the drawing, the valve assembly 7 is in a first switching state. In this state the first actuation pressure supply line 18, the second actuation pressure supply line 19, the module control pressure line 20 and the branch 20.1 are vented and therefore the actuation input ports 8.1, 8.2, 8.3 are vented as well. Since no pressure acts on the actuation input ports 8.1, 8.2, 8.3, the pressure actuated valve 8 is kept in its first switching position as shown in the drawing by the spring of the pressure actuated valve 8. Since the first and second actuation pressure generating valves 9a, 9b are in their first switching state according to the drawing, the pressure actuated valve 8 does not switch into its second switching state. Therefore, the shown switching state of the valve assembly 7 is a stable state.

To switch the valve assembly in the second switching state, the second actuation pressure generating valve 9b is switched into its second switching state, wherein it connects the pressure supply line 17 with the second actuation input port 8.2 of the pressure actuated valve 8. Now pressure from the pressure supply line 17 is applied to the second actuation input port 8.2, wherein the pressure actuated valve 8 is configured that the force due to the pressure acting on the second actuation input port 8.2 exceeds the spring force. That causes the pressure actuated valve 8 to switch to its second switching state, wherein the pressure supply line 17 is connected to the module control pressure line 20. Further, the third actuation input port 8.3 is applied with pressure via the branch 20.1 as well. In this second switching state, the pressure actuated valve 8 is kept in the switching state since pressure from the pressure supply line 17 acts durable in the third actuation input port 8.3 via the branch 20.1. This state is held independently from the switching state of the second actuation pressure generating valve 9b. That means, the second actuation pressure generating valve 9b must not be held in its second switching state to hold the pressure actuated valve 8 in its second switching state. Therefore, this second switching state of the pressure actuated valve 8 is stable as well.

To re-switch the pressure actuated valve 8 to its first switching state, the first actuation pressure generating valve 9a is switched to its second switching state, wherein the first actuation pressure supply line 18 is connected to the pressure supply line 17. Therefore, pressure from the pressure supply line 17 is applied to the first actuation input port 8.1 via the actuation pressure supply line 18. The spring of the pressure actuated valve 8 and the actuation input ports 8.1, 8.2, 8.3 are configured that the sum of the force of the spring and of the force due to the pressure acting on the first actuation input port 8.1 exceeds the force due to a pressure acting on the actuation input port 8.2 and/or on the actuation input port 8.3. Therefore, the pressure actuated valve 8 is re-switched in its first switching state according to the drawing. In this state, the module control pressure line 20 and the branch 20.1 are vented. Therefore, the actuation input port 8.3 is vented as well and the force acting on the pressure actuated valve 8 via the actuation input port 8.3 is set to zero. That means, that independently of the switching state of the second actuation pressure generating valve 9b and a pressure acting on the second actuation input port 8.2, the pressure actuated valve 8 is switched to its first switching state. Further, if the first actuation pressure supply line 18 is vented again by the first actuation pressure generating valve 9a, no more pressure is supplied to the first actuation input port 8.1 and no more pressure generated force acts on the pressure actuated valve 8 via this port. Therefore, the spring of the pressure actuated valve 8 holds the pressure actuated valve 8 in the first switching state.

Both switching states of the pressure actuated valve 8 are stable and can only be actively switched by the corresponding actuation of the first and second actuation pressure generating valves 9a, 9b. If every actuation input port 8.1, 8.2, 8.3 is vented, the pressure actuated valve 8 is held in the first switching state by the spring and if the pressure actuated valve 8 is in the second switching state, this state is held by the pressure acting on the third actuation input port 8.3 against the spring force. Therefore, the risk of switching the valve assembly 7, respectively the pressure actuated valve 8 to an unintentional switching state is reduced.

The module control pressure supplied from the valve assembly 7 to the module control pressure line 20 is used to switch an operating mode of the control valve 11 and therefore an operating mode of the module 1.

According to the first switching state of the valve assembly 7 respectively of the pressure actuated valve 8 and the first operating mode, no module control pressure is supplied from the pressure supply line 17 to the control valve 11 via the module control pressure line 20. This causes the control valve 11 to generate a switching state according to an external signal, for example from a brake pedal or from a foot brake module. Such an external signal can be transferred to the control valve 11 via the driver input control pressure port 12 (see Fig. 1) or via other input ports, in particular electric or electronic input ports. In the drawing these ports and corresponding lines are not shown to keep the drawing simple. In this state, the brake system 2 (see Fig. 1) can be controlled according to the external signal, wherein a brake force of the brake system 2 is continuously controlled according to the external signal during a moving state of the first vehicle.

According to a second operating mode, the pressure supply line 17 is connected to the control valve 11 via the pressure actuated valve 8 and the module control pressure line 20. The control valve 11 is configured to connect the pressure supply line 17 with the outlet port 5 as a reaction to this operating mode. Therefore, in this operating mode, a constant control pressure is supplied to the brake system 2 causing the activation of the brakes of the brake system 2. This operating mode is used to durably activate the brake system 2 of the first vehicle to hold it in a non-moving state.

Between both operating modes only active switching is possible by actuating the first and second actuation pressure generating valves 9a, 9b. Thereby it is ensured, that during a moving state of the first vehicle, no durable activation of the brake system 2 due to an unintentional switching to the second operating mode is carried out and further, during a non-moving, in particular a parking state, state of the first vehicle, a release of the brakes of the brake system 2 due to an unintentional switching to the first operating mode is avoided.

If the module comprises a control unit 6 (see Fig. 1), the first and second actuation pressure generating valves 9a, 9b are controlled by the control unit 6.

The control valve 11 preferably comprises a relay valve and/or a proportional valve to generate the control pressure at least in the first operating mode.

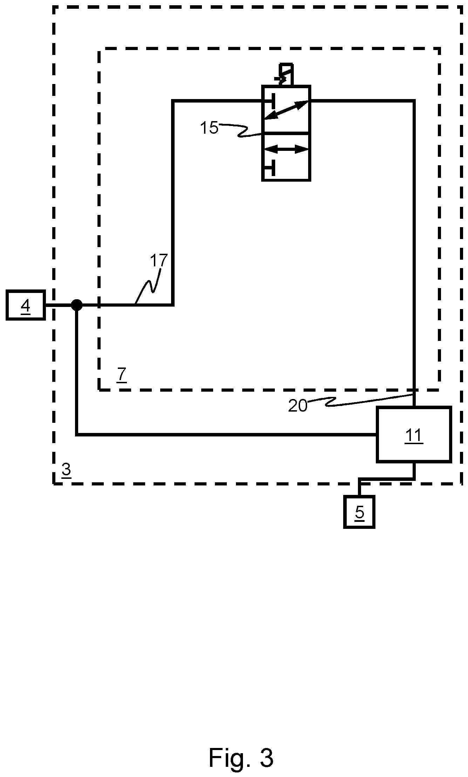

Fig. 3 shows a second embodiment of a valve unit of a module according to the present invention.

This embodiment differs from the first embodiment according to Fig. 2 in the valve assembly 7. The other elements correspond to the corresponding elements shown in Fig. 2. For their description, reference is made to Fig. 2. Here, the valve assembly 7 comprises a stable switching solenoid valve 15 with two stable switching states, wherein the stable switching solenoid valve 15 comprises an electromechanical actuation with a locking mechanism to keep the stable switching solenoid valve 15 in the current switching state.

The stable switching solenoid valve 15 is connected to the pressure supply line 17 and to the module control pressure line 20. In the drawing, a first switching state of the stable switching solenoid valve 15 is shown, wherein the stable switching solenoid valve 15 disconnects the pressure supply line 17 from the module control pressure line 20 and the module control pressure line 20 is vented. Therefore, no module control pressure is supplied to the control valve 11 via the module control pressure line 20 and therefore, the module 1, respectively the control valve 11 is in the first operating mode as described above. When the stable switching solenoid valve 15 is switched to its second switching state, the stable switching solenoid valve 15 connects the pressure supply line 17 to the module control pressure line 20. Thereby, a module control pressure is supplied to the control valve 11 and therefore, the module 1, respectively the control valve 11 is in the second operating mode as described above.

Providing a locking mechanism for each switching state of the stable switching solenoid valve 15, ensures that both switching states are stable and no unintentional switching of the stable switching solenoid valve 15 is carried out.

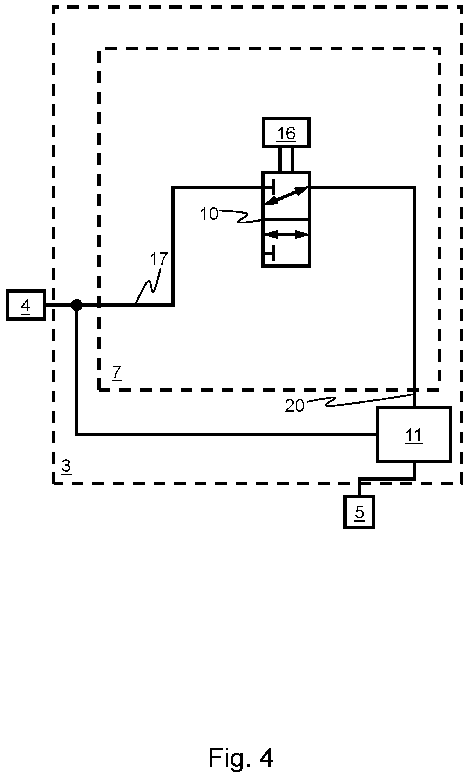

**Fig. 4** shows a third embodiment of a valve unit of a module according to the present invention.

This embodiment corresponds to the embodiment according to Fig. 3. However, instead of the stable switching solenoid valve 15 a self-locking valve 10 is provided with a driving device 16 configured to actuate the self-locking valve 10 and to switch it in its first or second switching state.

The driving device 16 is configured as a self-locking driving device with a spindle-nut-drive, which is driven by an electric motor, wherein a piston or valve element of the self-locking valve 10 is moved, to switch the self-locking valve 10 in its first or second switching state. Due to the self-locking driving device 16, each switching state of the self-locking valve 10 is stable and it is ensured that switching to an unintentional switching state is avoided.

Every embodiment according to the Figures 1 to 4 may relate to a module 1, which can be mounted in or on a second vehicle. Preferably, the module 1 may be configured as a trailer control module. Further preferably, the second vehicle may be connected to the first vehicle and wherein the first vehicle, in this case the trailer, is towed by the second vehicle. However, it is also possible to provide the module 1 in or on the first vehicle, respectively the trailer, as well.

### LIST OF REFERENCE SIGNS

- 1: module
- 2: brake system
- 3: valve unit
- 4: pressure source
- 5: outlet port
- 6: control unit
- 7: valve assembly
- 8: pressure actuated valve
- 8.1: first actuation input port
- 8.2: second actuation input port
- 8.3: third actuation input port
- 9a: first actuation pressure generating valve
- 9b: second actuation pressure generating valve
- 10: self-locking valve
- 11: control valve
- 12: driver input control pressure port
- 13: supply pressure outlet port
- 14: housing
- 15: stable switching solenoid valve
- 16: driving device
- 17: pressure supply line
- 18: first actuation pressure supply line
- 19: second actuation pressure supply line
- 20: module control pressure line
- 20.1: branch of the module control pressure line 20

## Claims

1. Module (1) for generating and supplying a control pressure for a pressure-controlled brake system (2) of a first vehicle, in particular a fluidic brake system, preferably a pneumatic or a hydraulic brake system, the module (1) comprises the following elements:
- a valve unit (3) comprising at least two stable switching states;
- a pressure source (4) configured to provide a supply pressure to the valve unit (3); and
- an outlet port (5) configured to supply the control pressure to the brake system (2) of the first vehicle; wherein
the module (1) is configured to generate the control pressure from the supply pressure according to at least two operating modes which are respectively activated according to one of the at least two switching states of the valve unit (3), **characterized in that**,
according to a second of the at least two operating modes, the module (1) is configured to set the generated control pressure to a constant control pressure value to activate the brake system (2) of the first vehicle to hold the first vehicle in a non-moving state or in a parking state.

2. Module (1) according to claim 1, wherein
the module (1) is configured to generate the control pressure between a minimum and a maximum control pressure value, wherein the minimum control pressure value is preferably zero.

3. Module (1) according to claim 2, wherein
according to a first of the at least two operating modes, the generated control pressure is controllable between the minimum and maximum control pressure value and/or
according to the second of the at least two operating modes, the constant control pressure value is the maximum control pressure value,.

4. Module (1) according to one of the preceding claims, wherein
the brake system of the first vehicle comprises a service brake of the first vehicle.

5. Module (1) according to one of the preceding claims, wherein
the valve unit (3) is configured to be controlled by an electric control signal.

6. Module (1) according to claim 5, wherein
the module (1) comprises a control unit (6) with electric or electronic control means, configured to generate or to receive the electric control signal or to supply the electric control signal to the valve unit (3).

7. Module (1) according to one of the preceding claims, wherein
for realizing the at least two stable switching states, the valve unit (3) comprises at least one valve assembly (7) with a pressure actuated valve (8) with at least two stable switching states, wherein preferably, the pressure actuated valve (8) comprises at least one actuation input port (8.3), wherein the pressure actuated valve (8) is configured to hold one of the at least two stable switching states of the pressure actuated valve (8) when the actuation input port (8.3) is pressurised, and/or, the pressure actuated valve (8) comprises a spring configured to hold one of the at least two stable switching states of the pressure actuated valve (8).

8. Module (1) according to claim 7, wherein
the valve assembly (7) comprises at least one actuation pressure generating valve (9a, 9b) the pressure actuated valve (8) is connected to for controlling at least one actuation pressure for the pressure actuated valve (8), wherein
the at least one actuation pressure generating valve (9a, 9b) preferably comprises a solenoid valve and/or a normally closed valve.

9. Module (1) according to one of the preceding claims, wherein
for realizing the at least two stable switching states, the valve unit (3) comprises at least one stable switching solenoid valve (15) and/or at least one self-locking valve (10) driven by a self-locking driving device (16), the self-locking driving device preferably comprises a self-locking electric motor and/or a self-locking spindle and nut drive.

10. Module (1) according to one of the preceding claims, wherein
the valve unit (3) comprises a control valve (11) wherein the valve unit (3) is configured to generate a module control pressure for controlling the control valve (11) according to the at least two switching states, wherein the control valve (11) is configured to generate the control pressure according to the module control pressure from the valve unit (3).

11. Module (1) according to one of the preceding claims, wherein
the module (1) is configured as a first vehicle control module, in particular a trailer control module, the module (1) comprising as a further element:
- a driver input control pressure port (12) for a driver input control pressure, from a brake pedal or from a foot brake module, wherein the module (1) is configured to generate the control pressure according to the driver input control pressure; and/or
- a supply pressure outlet port (13) configured to supply a brake system supply pressure to the brake system (2).

12. Module (1) according to one of the preceding claims, wherein
the first vehicle is a trailer, configured to be connected with and towed by a second vehicle, wherein the module (1) is configured to be provided in or on the second vehicle.

13. Module (1) according to one of the preceding claims, comprising
a housing (14) or a carrier member, wherein the elements of the module (1) are provided in and/or on the housing (14) or the carrier member.

14. Brake system (2) for a vehicle comprising a module (1) according to one of the claims 1 to 13.

15. Vehicle comprising a module (1) according to one of the claims 1 to 13 and/or a brake system (2) according to claim 14.

## Patentansprüche

1. Modul (1) zum Erzeugen und Zuführen eines Steuerdrucks für ein druckgesteuertes Bremssystem (2) eines ersten Fahrzeugs, insbesondere ein fluidisches Bremssystem, vorzugsweise ein pneumatisches oder ein hydraulisches Bremssystem, wobei das Modul (1) die folgenden Elemente umfasst:
- eine Ventileinheit (3), die mindestens zwei stabile Schaltzustände umfasst;
- eine Druckquelle (4), die dazu konfiguriert ist, einen Versorgungsdruck für die Ventileinheit (3) bereitzustellen; und
- einen Auslassanschluss (5), der dazu konfiguriert ist, den Steuerdruck an das Bremssystem (2) des ersten Fahrzeugs zuzuführen; wobei
das Modul (1) dazu konfiguriert ist, den Steuerdruck aus dem Versorgungsdruck gemäß mindestens zwei Betriebsmodi zu erzeugen, die jeweils gemäß einem der mindestens zwei Schaltzustände der Ventileinheit (3) aktiviert werden, **dadurch gekennzeichnet, dass**
gemäß einem zweiten der mindestens zwei Betriebsmodi das Modul (1) dazu konfiguriert ist, den erzeugten Steuerdruck auf einen konstanten Steuerdruckwert einzustellen, um das Bremssystem (2) des ersten Fahrzeugs zu aktivieren, um das erste Fahrzeug in einem stillstehenden Zustand oder in einem Parkzustand zu halten.

2. Modul (1) nach Anspruch 1, wobei
das Modul (1) dazu konfiguriert ist, den Steuerdruck zwischen einem minimalen und einem maximalen Steuerdruckwert zu erzeugen, wobei der minimale Steuerdruckwert vorzugsweise null ist.

3. Modul (1) nach Anspruch 2, wobei
gemäß einem ersten der mindestens zwei Betriebsmodi der erzeugte Steuerdruck zwischen dem minimalen und dem maximalen Steuerdruckwert steuerbar ist und/oder
gemäß dem zweiten der mindestens zwei Betriebsmodi der konstante Steuerdruckwert der maximale Steuerdruckwert ist.

4. Modul (1) nach einem der vorstehenden Ansprüche, wobei
das Bremssystem des ersten Fahrzeugs eine Betriebsbremse des ersten Fahrzeugs umfasst.

5. Modul (1) nach einem der vorstehenden Ansprüche, wobei
die Ventileinheit (3) dazu konfiguriert ist, durch ein elektrisches Steuersignal gesteuert zu werden.

6. Modul (1) nach Anspruch 5, wobei
das Modul (1) eine Steuereinheit (6) mit elektrischen oder elektronischen Steuermitteln umfasst, die dazu konfiguriert sind, das elektrische Steuersignal zu erzeugen oder zu empfangen oder das elektrische Steuersignal an die Ventileinheit (3) zuzuführen.

7. Modul (1) nach einem der vorstehenden Ansprüche, wobei
die Ventileinheit (3) zur Umsetzung der mindestens zwei stabilen Schaltzustände mindestens eine Ventilanordnung (7) mit einem druckbetätigten Ventil (8) mit mindestens zwei stabilen Schaltzuständen umfasst, wobei das druckbetätigte Ventil (8) vorzugsweise mindestens einen Betätigungseingangsanschluss (8.3) umfasst, wobei das druckbetätigte Ventil (8) dazu konfiguriert ist, einen der mindestens zwei stabilen Schaltzustände des druckbetätigten Ventils (8) beizubehalten, wenn der Betätigungseingangsanschluss (8.3) unter Druck steht, und/oder das druckbetätigte Ventil (8) eine Feder umfasst, die dazu konfiguriert ist, einen der mindestens zwei stabilen Schaltzustände des druckbetätigten Ventils (8) beizubehalten.

8. Modul (1) nach Anspruch 7, wobei
die Ventilanordnung (7) mindestens ein Betätigungsdruckerzeugungsventil (9a, 9b) umfasst, mit dem das druckbetätigte Ventil (8) verbunden ist, um mindestens einen Betätigungsdruck für das druckbetätigte Ventil (8) zu steuern, wobei
das mindestens eine Betätigungsdruckerzeugungsventil (9a, 9b) vorzugsweise ein Magnetventil und/oder ein normalerweise geschlossenes Ventil umfasst.

9. Modul (1) nach einem der vorstehenden Ansprüche, wobei
die Ventileinheit (3) zur Umsetzung der mindestens zwei stabilen Schaltzustände mindestens ein stabil schaltendes Magnetventil (15) und/oder mindestens ein selbstsperrendes Ventil (10), das von einer selbstsperrenden Antriebsvorrichtung (16) angetrieben wird, umfasst, wobei die selbstsperrende Antriebsvorrichtung vorzugsweise einen selbstsperrenden Elektromotor und/oder einen selbstsperrenden Spindel- und Mutternantrieb umfasst.

10. Modul (1) nach einem der vorstehenden Ansprüche, wobei
die Ventileinheit (3) ein Steuerventil (11) umfasst, wobei die Ventileinheit (3) dazu konfiguriert ist, einen Modulsteuerdruck zum Steuern des Steuerventils (11) gemäß den mindestens zwei Schaltzuständen zu erzeugen, wobei das Steuerventil (11) dazu konfiguriert ist, den Steuerdruck gemäß dem Modulsteuerdruck von der Ventileinheit (3) zu erzeugen.

11. Modul (1) nach einem der vorstehenden Ansprüche, wobei
das Modul (1) als ein erstes Fahrzeugsteuerungsmodul, insbesondere ein Anhängersteuerungsmodul konfiguriert ist, wobei das Modul (1) als ein weiteres Folgendes Element umfasst:
- einen Fahrereingabe-Steuerdruckanschluss (12) für einen Fahrereingabe-Steuerdruck von einem Bremspedal oder von einem Fußbremsmodul, wobei das Modul (1) dazu konfiguriert ist, den Steuerdruck gemäß dem Fahrereingabe-Steuerdruck zu erzeugen; und/oder
- einen Versorgungsdruckauslassanschluss (13), der dazu konfiguriert ist, dem Bremssystem (2) einen Bremssystemversorgungsdruck zuzuführen.

12. Modul (1) nach einem der vorstehenden Ansprüche, wobei
das erste Fahrzeug ein Anhänger ist, der dazu konfiguriert ist, mit einem zweiten Fahrzeug verbunden und von diesem gezogen zu werden, wobei das Modul (1) dazu konfiguriert ist, in oder an dem zweiten Fahrzeug bereitgestellt zu sein.

13. Modul (1) nach einem der vorstehenden Ansprüche, umfassend ein Gehäuse (14) oder ein Trägerelement, wobei die Elemente des Moduls (1) in und/oder an dem Gehäuse (14) oder dem Trägerelement bereitgestellt sind.

14. Bremssystem (2) für ein Fahrzeug, umfassend ein Modul (1) nach einem der Ansprüche 1 bis 13.

15. Fahrzeug, umfassend ein Modul (1) nach einem der Ansprüche 1 bis 13 und/oder ein Bremssystem (2) nach Anspruch 14.

## Revendications

1. Module (1) pour générer et fournir une pression de commande pour un système de freinage à commande de pression (2) d'un premier véhicule, en particulier un système de freinage fluidique, de préférence un système de freinage pneumatique ou hydraulique, le module (1) comprend les éléments suivants :
- une unité de soupape (3) comprenant au moins deux états de commutation stables ;
- une source de pression (4) configurée pour fournir une pression d'alimentation à l'unité de soupape (3) ; et
- un orifice de sortie (5) configuré pour fournir la pression de commande au système de freinage (2) du premier véhicule ; dans lequel
le module (1) est configuré pour générer la pression de commande à partir de la pression d'alimentation selon au moins deux modes de fonctionnement qui sont respectivement activés selon l'un des au moins deux états de commutation de l'unité de soupape (3), **caractérisé en ce que**,
selon un second des au moins deux modes de fonctionnement, le module (1) est configuré pour régler la pression de commande générée à une valeur de pression de commande constante pour activer le système de freinage (2) du premier véhicule pour maintenir le premier véhicule dans un état immobile ou dans un état de stationnement.

2. Module (1) selon la revendication 1, dans lequel
le module (1) est configuré pour générer la pression de commande entre une valeur de pression de commande minimale et une valeur de pression de commande maximale, dans lequel la valeur de pression de commande minimale est de préférence nulle.

3. Module (1) selon la revendication 2, dans lequel
selon un premier des au moins deux modes de fonctionnement, la pression de commande générée peut être commandée entre la valeur de pression de commande minimale et la valeur de pression de commande maximale et/ou
selon le second des au moins deux modes de fonctionnement, la valeur de pression de commande constante est la valeur de pression de commande maximale.

4. Module (1) selon l'une des revendications précédentes, dans lequel
le système de freinage du premier véhicule comprend un frein de service du premier véhicule.

5. Module (1) selon l'une des revendications précédentes, dans lequel
l'unité de soupape (3) est configurée pour être commandée par un signal de commande électrique.

6. Module (1) selon la revendication 5, dans lequel
le module (1) comprend une unité de commande (6) avec des moyens de commande électriques ou électroniques, configurée pour générer ou pour recevoir le signal de commande électrique ou pour fournir le signal de commande électrique à l'unité de soupape (3).

7. Module (1) selon l'une des revendications précédentes, dans lequel
pour réaliser les au moins deux états de commutation stables, l'unité de soupape (3) comprend au moins un ensemble soupape (7) avec une soupape actionnée par pression (8) avec au moins deux états de commutation stables, dans lequel, de préférence, la soupape actionnée par pression (8) comprend au moins un orifice d'entrée d'actionnement (8.3), dans lequel la soupape actionnée par pression (8) est configurée pour maintenir l'un des au moins deux états de commutation stables de la soupape actionnée par pression (8) lorsque l'orifice d'entrée d'actionnement (8.3) est sous pression, et/ou la soupape actionnée par pression (8) comprend un ressort configuré pour maintenir l'un des au moins deux états de commutation stables de la soupape actionnée par pression (8).

8. Module (1) selon la revendication 7, dans lequel
l'ensemble soupape (7) comprend au moins une soupape de génération de pression d'actionnement (9a, 9b) à laquelle la soupape actionnée par pression (8) est reliée pour commander au moins une pression d'actionnement pour la soupape actionnée par pression (8), dans lequel
la au moins une soupape de génération de pression d'actionnement (9a, 9b) comprend, de préférence, une électrovanne et/ou une soupape normalement fermée.

9. Module (1) selon l'une des revendications précédentes, dans lequel
pour réaliser les au moins deux états de commutation stables, l'unité de soupape (3) comprend au moins une électrovanne de commutation stable (15) et/ou au moins une soupape autobloquante (10) entraînée par un dispositif d'entraînement autobloquant (16), le dispositif d'entraînement autobloquant comprend, de préférence, un moteur électrique autobloquant et/ou un entraînement par broche et écrou autobloquant.

10. Module (1) selon l'une des revendications précédentes, dans lequel
l'unité de soupape (3) comprend une soupape de commande (11), dans lequel l'unité de soupape (3) est configurée pour générer une pression de commande de module pour commander la soupape de commande (11) en fonction des au moins deux états de commutation, dans lequel la soupape de commande (11) est configurée pour générer la pression de commande selon la pression de commande de module provenant de l'unité de valve (3).

11. Module (1) selon l'une des revendications précédentes, dans lequel
le module (1) est configuré comme un premier module de commande de véhicule, en particulier un module de commande de remorque, le module (1) comprenant comme élément supplémentaire :
- un orifice de pression de commande d'entrée de conducteur (12) pour une pression de commande d'entrée de conducteur, provenant d'une pédale de frein ou d'un module de frein à pied, dans lequel le module (1) est configuré pour générer la pression de commande selon la pression de commande d'entrée de conducteur ; et/ou
- un orifice de sortie de pression d'alimentation (13) configuré pour fournir une pression d'alimentation de système de freinage au système de freinage (2).

12. Module (1) selon l'une des revendications précédentes, dans lequel
le premier véhicule est une remorque, configurée pour être reliée et remorquée par un second véhicule, dans lequel le module (1) est configuré pour être disposé dans ou sur le second véhicule.

13. Module (1) selon l'une des revendications précédentes, comprenant un boîtier (14) ou un élément porteur, dans lequel les éléments du module (1) sont disposés dans et/ou sur le boîtier (14) ou l'élément porteur.

14. Système de freinage (2) pour un véhicule comprenant un module (1) selon l'une des revendications 1 à 13.

15. Véhicule comprenant un module (1) selon l'une des revendications 1 à 13 et/ou un système de freinage (2) selon la revendication 14.
